# EUROPEAN PATENT APPLICATION

(11) **EP 4 685 378 A1**
(43) Date of publication of application: **28.01.2026**
(21) Application number: 25178588.7
(22) Date of filing: 23.05.2025
(51) Int. Cl.: F16L 17/035, F16J 15/02, F16L 21/00, F16L 21/03

(54) **SEALING ELEMENT IN GLASS FIBER REINFORCED POLYESTER (GRP) COUPLINGS**

(30) Priority: 24.07.2024 TR 2024009606
(71) Applicant: Subor Boru Sanayi ve Ticaret Anonim Sirketi, 34718 Kadiköy, Istanbul (TR)
(72) Inventor: ARDA, Cihat, Sakarya (TR); YUKSEL, Gurcan, Sakarya (TR); ATES, Cezmi, Sakarya (TR); AKARSU, Beyti, Istanbul (TR); VURAL, Mursel, Istanbul (TR); SELMANOGLU, Mert, Sakarya (TR); CETINTAS, Ahmet, Istanbul (TR); AVCI, Enver, Istanbul (TR); CAKIRBAS, Bilal, Istanbul (TR); BAYRAM, Cavit, Istanbul (TR)
(74) Representative: Yamankaradeniz, Kemal

(57) **Abstract**

The invention relates to the glass fiber reinforced polyester (GTP) coupling for joining glass fiber reinforced polyester (GRP) pipes, characterized by comprising; integrated full-face gasket with tabs on the bottom that covers the pipe surface and provides sealing, tabs on the bottom of the integrated full-face gasket with tabs on the base, seal mounting channel on the coupling.

## Description

### Field of the Invention

The present invention relates to glass fiber reinforced polyester (GRP) coupling for joining glass fiber reinforced polyester (GRP) pipes together, and to gaskets used as sealing elements in the coupling.

In particular, the present invention relates to a sealing element that prevents the gasket from falling out of the coupling by eliminating the rotation problem with its base structure and press-fit assembly during the assembly of glass fiber reinforced polyester (GRP) pipes together.

### State of the Art

Today, glass fiber reinforced polyester (GRP) pipes are used in drinking water and clean water transmission lines, irrigation main transmission and network lines, sewerage lines, etc. The connection of glass fiber reinforced polyester (GRP) pipes to each other is provided by glass fiber reinforced polyester (GRP) couplings. There is a gasket inside said couplings to ensure tightness. In current applications, GRP pipes are generally connected to each other with Reka type gasket couplings or full face gasket couplings produced by the wet winding method on the seal.

In Reka type gasket couplings, a channel is opened on the right, left and middle of the coupling and the gaskets are placed separately in these channels. The gasket slots on this type of gasket coupling are flat or widening towards the surface, and the gaskets may fall off during installation into the channel on the coupling. Gaskets that are prone to falling are attached to the coupling with tape to preserve them until the assembly phase. Additionally, during the installation of the pipes into the coupling, the gasket may rotate within the coupling channel due to the horizontal force applied and the structure and since the gasket lips cannot wrap around the outer surface of the pipe, it may be possible that they cannot fulfil their sealing function. This nonconformity cannot be seen with the naked eye. In order to see the gasket rotation error, the gasket condition between the coupling and the pipe is checked with special tools. This situation brings additional workload.

In the other gasket type; glass fibers soaked in resin are wrapped around the gasket attached to the mold, and the coupling is produced, the inner surface of which is covered with a gasket. Due to the way these gaskets are produced, an additional production machine and coupling mold are required for each diameter pipe. Each gasket is attached to the coupling mold, and the coupling is produced by wrapping fiber soaked in resin onto it.

As a result of the aforementioned issues and the limited supply of available solutions, it became necessary to carry out an improvement in the relevant technical field.

### Object of the Invention

The present invention relates to the sealing element structure in glass fiber reinforced polyester (GRP) couplings, which eliminates the above-mentioned disadvantages and brings new advantages to the relevant technical field.

The product of the invention is formed by opening straight channels on the inner surface of the classical coupling produced on the pipe production machine and placing the gasket in these channels. Since the gasket is wide and there are multiple protrusions with tabs on the base of the gasket, the gasket will not rotate or fall as it fits into the channels and the tabs provide compression.

The gaskets of the present invention cover almost the entire surface of the coupling. There are threads with tabs on the gasket surface to wrap and compress the channels.

Another object of the present invention is to eliminate the possibility of rotation of the gaskets, thanks to the base structure of the gasket and the press-fit assembly.

Another object of the present invention is to end the use of molds for each coupling. There is no need for additional production machinery.

### Figures Clarifying the Invention

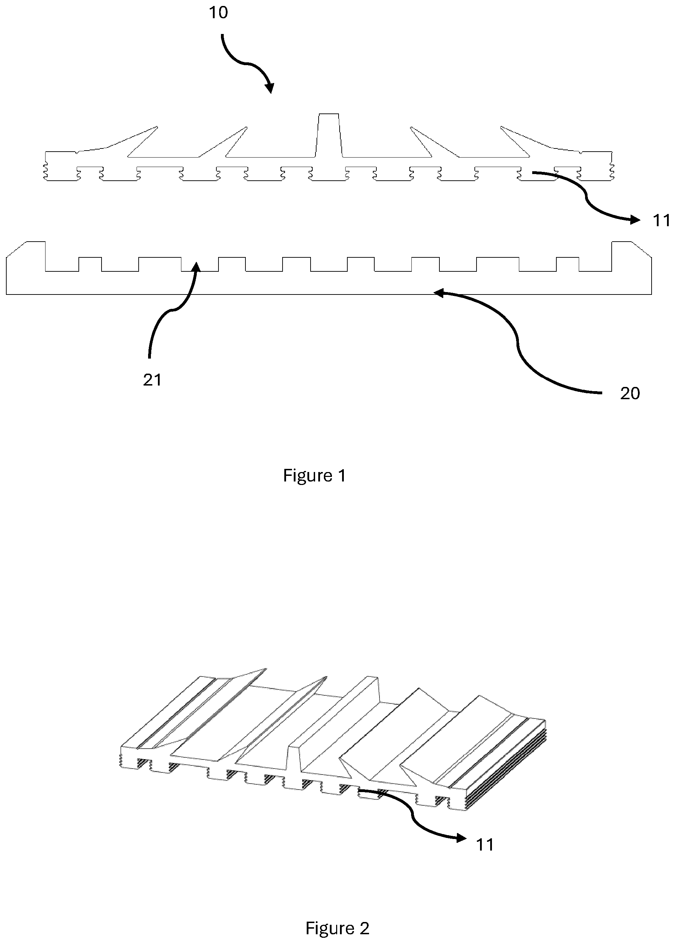

**Figure 1****:** Front view of the invention
**Figure 2****:** Sectional view of integrated full-face gasket with tabs on the base

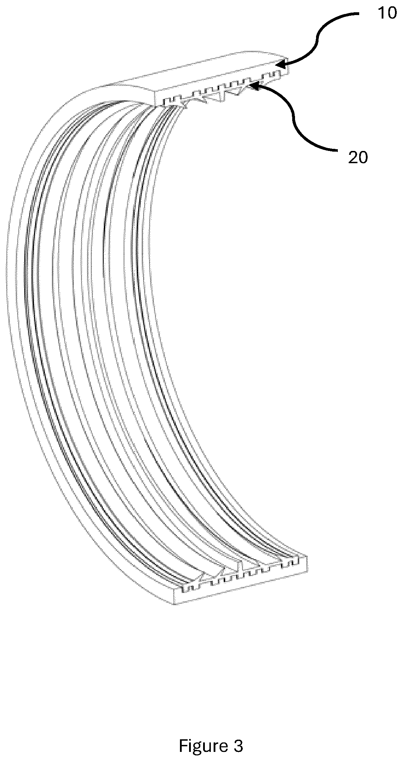

**Figure 3****:** Perspective view of the invention

### Description of the Part References

**10.** Integrated full-face gasket with tabs on the base
**11.** Gasket thread with tab
**20.** Coupling
**21.** Gasket mounting channel

### Detailed Description of the Invention

In this detailed description, the preferred embodiments of the sealing element structure in couplings of the present invention are described only for clarifying the subject matter in a manner such that no limiting effect is created.

The invention comprises integrated full-face gasket with tabs on the base (10) which provides sealing by covering the pipe surface with lips, and a coupling (20), which is the connecting element that connects the pipes. Gasket thread with tab (11) on the base of the integrated full-face seal with tabs on the base (10) is fixed by entering the gasket mounting channel (21) on the coupling (20). Thus, it prevents turning and falling. Gasket threads with tab (11) at the base of the integrated full face gasket with tabs on the base (10) enter the gasket mounting channel (21) inside the coupling (20), ensuring that the integrated full face gasket with tabs on the base (10) is held to the coupling (20).

There are gasket threads with tab (11) under the integrated full face gasket with tabs on the base (10), which is the subject of the invention.

Channels appropriate to the width and number of tabs are opened into the coupling (20).

This integrated full face gasket with tabs on the base (10) is mounted by applying pushing force to the gasket mounting channel (21) in the coupling (20). The object of these gasket threads with tab (11) is to ensure that the integrated full face gasket with tabs on the base (10) is tightly connected to the coupling (20).

## Claims

1. Glass fiber reinforced polyester (GRP) coupling (20) for joining glass fiber reinforced polyester (GRP) pipes together, **characterized by comprising;**
- An integrated full-face gasket with tabs on the base (10) which provides sealing by covering the pipe surface,
- A gasket threads with tab (11) located on the base of the integrated full-face seal with tabs on the base (10),
- A gasket mounting channel (21) located on the coupling (20).

2. A coupling (20) configuration according to claim 1, **characterized in that;** the gasket threads with tab (11) are inserted into the gasket mounting channel (21) and fixed.

3. A coupling (20) configuration according to claim 1, **characterized in that;** the gasket threads with tab (11) located at the base of the integrated full-face gasket with tabs on the base (10), have a structure with tabs.
